# EUROPÄISCHE PATENTSCHRIFT

(11) **EP 0 622 281 B1**
(45) Veröffentlichungstag und Bekanntmachung des Hinweises auf die Patenterteilung: **18.09.1996**
(21) Anmeldenummer: 94106777.9
(22) Anmeldetag: 29.04.1994
(51) Int. Cl.: B60T 3/00

(54) **Auflaufkeil für Personenkraftwagen oder dgl.**
Wheel chock for passenger cars or the like
Cale de roue pour voitures particulières ou similaires

(30) Priorität: 30.04.1993 DE 9306525 U
(43) Veröffentlichungstag der Anmeldung: 02.11.1994
(73) Patentinhaber: HEYCO-WERK HEYNEN GmbH & Co. KG, D-42855 Remscheid (DE)
(72) Erfinder: Heynen, Ernst Peter, D-42369 Wuppertal (DE)
(74) Vertreter: Peerbooms, Rudolf, Dipl.-Phys.

(56) Entgegenhaltungen:
- CH-A- 407 877
- DE-A- 3 442 146
- DE-A- 4 008 139
- DE-U- 9 306 525
- US-A- 1 694 316
- US-A- 3 557 909
- US-A- 3 858 690
- US-A- 4 034 961

## Beschreibung

Die Erfindung betrifft einen Auflaufkeil für Personenkraftwagen oder dgl., der eine, z.B. ebene, Bodenfläche und eine gekrümmte Reifen-Auflauffläche besitzt.

Die bekannten Auflaufkeile bestehen im allgemeinem aus einem Metallklotz, der an seiner der Keilspitze gegenüberliegenden Rückseite mit einem Handgriff versehen ist. Derartige Auflaufkeile werden als loses Teil bespielsweise im Kofferraum mitgeführt, wo sie sich, insbesondere im Hinblick auf ihre verhältnismäßig sperrige Form, oft als sehr lästig erweisen. Zudem sind sie schwergewichtig, können rosten und sind in der Handhabung insbesondere bei Frost und Schnee problematisch, da sie dann beim Greifen mit bloßen Händen zu Erfrierverletzungen führen können. Insbesondere auf glattem Untergrund sind die bekannten Metall-Auflaufkeile nicht ausreichend rutschfest.

Ein Auflaufkeil der eingangs vorausgesetzten Art ist aus der US-PS 16 94 316 bekannt. Dieser Auflaufkeil besitzt die typisch gekrümmte Oberfläche und eine Standfläche. Die Unterbringung in einem Kraftfahrzeug ist unvorteilhaft, da der Auflaufkeil sich als sperrig darstellt. In der Unterseite des bekannten Auflaufkeiles sind im übrigen Löcher ausgebildet, welche bis zur gekrümmten Auflauffläche - unterseitig - reichen. Weiter ist aus der DE-OS 40 08 139 eine Radunterlage für Kraftfahrzeuge gekannt, welche aus einem Bausatz übereinander anordbarer und formschlüssig miteinander verbindbarer Bausatzelemente besteht. Dieser Bausatz betrifft jedoch keinen Auflaufkeil.

Im Hinblick auf den Stand der Technik gemäß US-PS 16 94 316 beschäftigt sich die Erfindung mit der technischen Problematik, einen Auflaufkeil anzugeben, der hinsichtlich seiner Handhabung verbessert ist.

Im weiteren ist auch angestrebt, daß der Auflaufkeil möglichst rutschfähig ist und sich durch geringes Gewicht und geringen Preis auszeichnet.

Ausgehend von dem im Stand der Technik bekannten Auflaufkeil ist zur Lösung dieser Problematik vorgesehen, daß der Auflaufkeil in einen die Bodenfläche aufweisenden Unterkeil und einen die Auflauffläche aufweisenden Oberkeil unterteilt ist, daß der Unter- und Oberkeil etwa gleiche Größe aufweisen und an ihren Anlageseiten mit korrespondierenden Steckvorsprüngen und Steckaufnahmen ineinandergreifen und daß der Unterkeil und der Oberkeil in einer um 180° gegenüber der Gebrauchsstellung gewendeten Verwahrstellung zu einem flachen, etwa trapezförmigen Gebilde zusammensteckbar sind. Bevorzugt ist hierbei vorgesehen, daß der Unterkeil und der Oberkeil aus Kunststoff bestehen und daß die Bodenfläche und die Auflauffläche als Lochgitter, vorzugsweise als wabenartiges Lochgitter, ausgebildet sind.

Der Auflaufkeil nach der Erfindung zeichnet sich durch eine Reihe von Vorteilen aus. Durch seinen Aufbau aus zwei keilförmigen, in verschiedenen Stellungen zusammensteckbaren Teilen kann der Auflaufkeil bei Nichtgebrauch in ein verhältnismäßig flaches Gebilde umgewandelt werden, bei dem die Bodenfläche und die Reifen-Auflauffläche im wesentlichen parallel zueinander liegen, so daß der Auflaufkeil raumsparend aufbewahrt werden kann. Durch seine Herstellung aus Kunststoff, z. B. Polypropylen, besitzt er nur ein verhältnismäßig geringes Gewicht und sind die üblichen Nachteile von Metall-Auflaufkeilen wie Rostgefahr und kritische Handhabung bei Frost vermieden. Durch die bei Kunststoffteilen in sehr einfacher Weise ausbildbaren Lochgitter an der Reifen-Auflauffläche und der Bodenfläche ist ein guter Reibschluß mit dem Reifen bzw. der Bodenfläche erzielt, was sich insbesondere im Fall von schon teilweise abgefahrenen Reifenprofilen und bei nicht-asphaltierten Böden, z. B. auf Erdböden oder Rasenflächen, als besonderer Vorteil erweist. In das Lochgitter eindringende Verunreinigungen, z. B. Schmutz oder Schnee, können bequem ausgeklopft werden. Angesichts des geringen Gewichtes ist der Auflaufkeil bequem handhabbar, so daß sich ein besonderer Handgriff erübrigt. Der Auflaufkeil stellt ein insgesamt sehr preiswertes Teil dar, das sich zur serienmäßigen Grundausstattung eines PKW's eignet.

In Ausgestaltung der Erfindung kann vorgesehen werden, daß der Unter- und Oberkeil in der Verwahrstellung von einer Schraube durchsetzt sind, zur Schraubverbindung mit einer Halterung. Die Halterung ist fahrzeugseitig. Der Kopf der Schraube ist zweckmäßigerweise in einer Ausnehmung des Oberkeils versenkt aufgenommen. Hierzu kann im Inneren des Oberkeiles ein Stützbock für den Kopf der Schraube angeordnet sein, dessen Oberseite in der Verwahrstellung parallel zur Bodenfläche des Unterkeiles liegt. Der Stützkopf kann angeformt sein. In der Verwahrstellung liegt somit der Unterkeil mit seiner Bodenfläche an der Halterung an, während der Oberkeil in seiner gewendeten Verwahrstellung auf diesem Unterkeil aufliegt und beide Keile durch dieselbe Schraube an der Halterung festgespannt sind.

Gemäß einer speziellen Ausführungsform kann vorgesehen werden, daß der Oberkeil an seiner Anlageseite vier, an den Ecken eines Rechteckes angeordnete, im Querschnitt längliche Steckvorsprünge aufweist, die mit ihrer Querschnitts-Längserstreckung parallel zueinander gerichtet sind und denen korrespondierende Aufnahmen in der Anlageseite des Unterkeiles zugeordnet sind. Die Aufnahmen sind Ausnehmungen. Eine solche Ausbildung der Steckverbindung legt die nur zwei möglichen Relativlagen von Oberkeil und Unterkeil narrensicher fest. Hierbei können zur Erhöhung der Stabilität der Steckverbindung noch weitere Steckvorsprünge an den Anlageseiten im Bedarfsfall vorgesehen werden.

Nach weiteren Merkmalen der Erfindung kann vorgesehen werden, daß der Unter- und Oberkeil als Kästen ausgebildet sind, die jeweils durch eine Mehrzahl von sich kreuzenden, die Lochgitter der Boden- und Auflauffläche bildenden Längs- und Querwände ausgesteift sind, wobei die Kreuzungspunkte von Längs- und Querwänden durch abgerundete Eckverstrebungen verstärkt sind. Ein besonders guter Reibschluß mit Reifen bzw. Boden wird erreicht, wenn der mittlere Längsbereich der Kästen frei von Längswänden ist und wenn die Gitterlöcher in diesem mittleren Längsbereich wesentlich größer als die Gitterlöcher in den äußeren Bereichen sind.

Gemäß einer bevorzugten Ausführungsform der Erfindung kann vorgesehen werden, daß der Unterkeil an seiner hohen Keilseite zwei Eckfüße aufweist, die über seine Bodenfläche vorstehen. Hierdurch wird eine hohe Rutschfestigkeit auf glattem Untergrund sichergestellt, da die Eckfüße sich in den Untergrund einkrallen können. Hierbei ist vorteilhafterweise ferner vorgesehen, daß der Unterkeil bodenseitig zwischen seinen Eckfüßen mit einer flachen bogenförmigen Ausnehmung von einigen Millimetern Tiefe versehen ist und daß der Auflaufkeil im Bereich seiner Eckfüße mit einer über seine hohe Keilseite und/oder seine Längsseiten vorstehenden Materialverstärkung versehen ist. Die Materialverstärkung befindet sich an dem Unterkeil. Mit diesen Maßnahmen wird der Umstand berücksichtigt, daß der Auflaufkeil seine höchste Belastung im Bereich dieser Eckfüße erfährt und in diesem Bereich infolgedessen eine besonders hohe Stabilität aufweisen muß.

Zweckmäßigerweise sind der Oberkeil und der Unterkeil an ihren Anlageseiten in ihrem mittleren Bereich mit einer großflächig ineinandergreifenden Steckeinrichtung versehen, deren Querabmessung größer als die Hälfte der Querabmessungen des Auflaufkeiles sind. Beispielsweise kann hierzu im Oberkeil eine kreisförmige Steckaufnahme für ein oder mehrere am Unterkeil angeformte abgerundete Steckzapfen vorgesehen sein, welche mit radialen Verdrehungsschutz-Ansätzen versehen sind, denen im Oberkeil korrespondierende Aufnahmen zugeordnet sind. Eine solche mittige Steckzapfenverbindung kann großen Scherkräften standhalten und verleiht damit dem Auflaufkeil eine hohe Stabilität.

Ferner kann der Erfindung zufolge vorgesehen werden, daß der Oberkeil und der Unterkeil durch eine lösbare Schnappverbindung in der Gebrauchsstellung und in der Verwahrstellung zusammengehalten sind, wobei vorteilhafterweise zwischen Oberkeil und Unterkeil eine nach außen hin offene Flachausnehmung zum Ansetzen eines Abhebelungswerkzeuges, z.B. auch einer Münze, angeordnet ist. Hierdurch ist die Handhabung bei der Umstellung des Auflaufkeiles zwischen Arbeitsstellung und Verwahrstellung besonders bequem durchführbar. Die Schnappverbindungsteile sind an den aus Kunststoff bestehenden Oberkeil bzw. Unterkeil einstückig angeformt mit dem Vorteil, daß keine zusätzlichen Befestigungselemente erforderlich sind, die verloren werden könnten. Zudem ist die Anformung der Schnappverbindung am Oberkeil und Unterkeil mit geringem Herstellaufwand durchführbar.

Weitere Merkmale der Erfindung sind in den Unteransprüchen angegeben und nachfolgend in Verbindung mit der Zeichnung näher erläutert.

Die Erfindung wird im folgenden anhand der in der Zeichnung dargestellten Ausführungsbeispiele näher beschrieben. In der Zeichnung zeigen:
- Fig. 1: In Seitenansicht einen Auflaufkeil erster Ausführungsform nach der Erfindung in Gebrauchsstellung,
- Fig. 2: den Auflaufkeil nach Fig. 1 in Verwahrstellung,
- Fig. 3: eine Draufsicht auf den Auflaufkeil, in Fig. 2 in Richtung des Pfeiles III gesehen,
- Fig. 4: einen Längsmittelschnitt gemäß der Linie IV-IV in Fig. 5 durch den Oberkeil des zweigeteilten Auflaufkeiles,
- Fig. 5: eine Draufsicht auf den Oberkeil, in Fig. 4 in Richtung des Pfeiles V gesehen,
- Fig. 6: einen Längsschnitt durch den Oberkeil gemäß der Schnittlinie VI-VI in Fig. 5,
- Fig. 7: eine Untenansicht des Oberkeiles in Fig. 4 in Richtung des Pfeiles VII gesehen,
- Fig. 8: einen Längsmittelschnitt gemäß der Linie VIII-VIII in Fig. 9 durch den Unterkeil,
- Fig. 9: eine Untenansicht auf den Unterkeil, in Fig. 8 in Richtung des Pfeiles IX gesehen,
- Fig. 10: einen Längsschnitt durch den Unterkeil gemäß der Linie X-X in Fig. 9,
- Fig. 11: eine Draufsicht auf den Unterkeil in Fig. 8 in Richtung des Pfeiles XI gesehen,
- Fig. 12: veranschaulicht schematisch eine zweite, bevorzugte Ausführungsform eines Auflaufkeiles nach der Erfindung, der hier in auseinandergeklapptem Zustand dargestellt ist,
- Fig. 13: zeigt eine Draufsicht auf den Unterkeil der Ausführungsform nach Fig. 12,
- Fig. 14: eine Ansicht auf die hohe Keilseite des Unterkeiles gemäß Fig. 13,
- Fig. 15: eine Seitenansicht auf den Unterkeil gemäß Fig. 13,
- Fig. 16: einen Schnitt gemäß der Linie XVI-XVI in Fig. 13,
- Fig. 17: eine Untenansicht des Unterkeiles gemäß Fig. 13,
- Fig. 18: den Oberkeil der Ausführungsform nach Fig. 12 in Untenansicht,
- Fig. 19: eine Ansicht auf die hohe Keilseite des Oberkeiles gemäß Fig. 18,
- Fig. 20: ein Schnitt gemäß der Linie XX-XX in Fig. 18,
- Fig. 21: eine Draufsicht auf die Oberseite (Reifenauflauffläche) des Oberkeiles gemäß Fig. 18 bzw. Fig. 19.

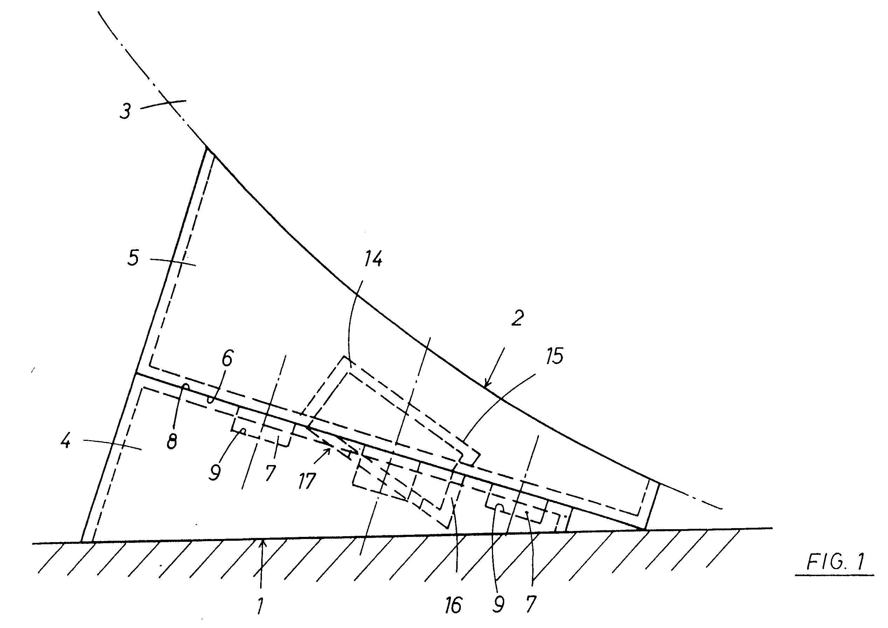

Fig. 1 zeigt einen Auflaufkeil mit ebener Bodenfläche 1 und gekrümmter Auflaufläche 2 für einen Reifen 3. Der Auflaufkeil ist - etwa längs der Winkelhalbierenden des Keilwinkels - in einen Unterkeil 4 und einen Oberkeil 5 geteilt, die annähernd gleiche Größe aufweisen. Der Oberkeil 5 ist an seiner Anlageseite 6 mit mehreren Steckvorsprüngen 7 versehen, denen an der Anlageseite 8 des Unterkeiles 4 korrespondierende Steckaufnahmen 9 zugeordnet sind.

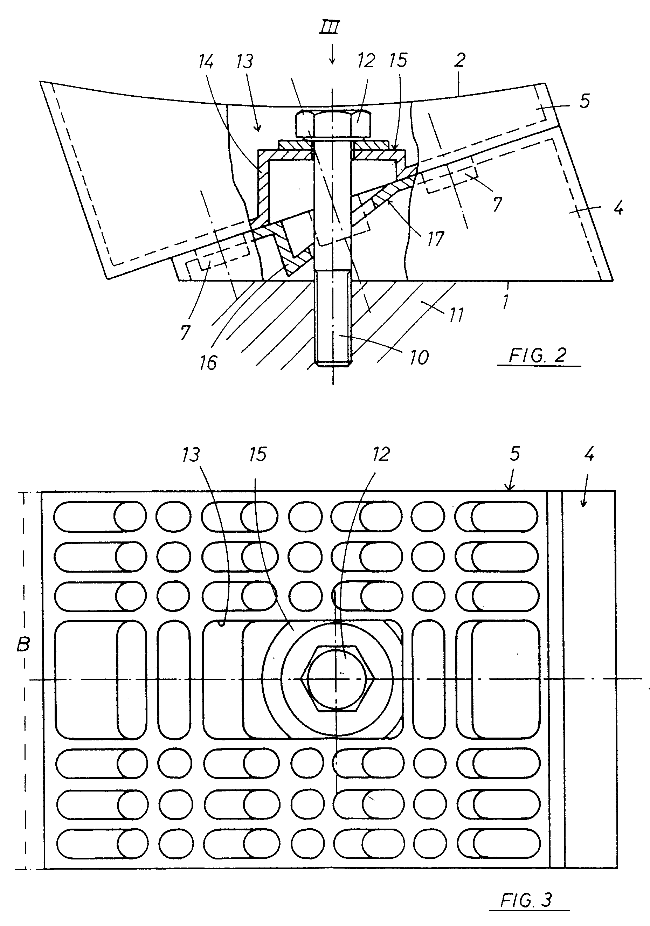

Die Steckvorsprünge 7 und Steckaufnahmen 9 sind derart ausgebildet, daß der Oberkeil 5 auch in einer um 180° gewendeten Stellung auf den Unterkeil 4 aufgesteckt werden kann, wonach dann die beiden Keile 4, 5 die in Fig. 2 gezeigte Verwahrstellung einnehmen, in der sie zu einem etwa trapezförmigen, flachen Gebilde zusammengesteckt sind. Unter- und Oberkeil 4, 5 sind in der Verwahrstellung mittels einer sie durchsetzenden Schraube 10 an einer Halterung 11 festschraubbar, wobei der Kopf 12 der Schraube 10 in einer Ausnehmung 13 des Oberkeiles 5 versenkt aufgenommen ist, vgl. auch Fig. 3. Im Inneren des Oberkeiles 5 ist ein Stützbock 14 für den Schraubenkopf 12 angeordnet, dessen Oberseite 15 in der Verwahrstellung parallel zur Bodenfläche 1 des Unterkeiles 4 liegt.

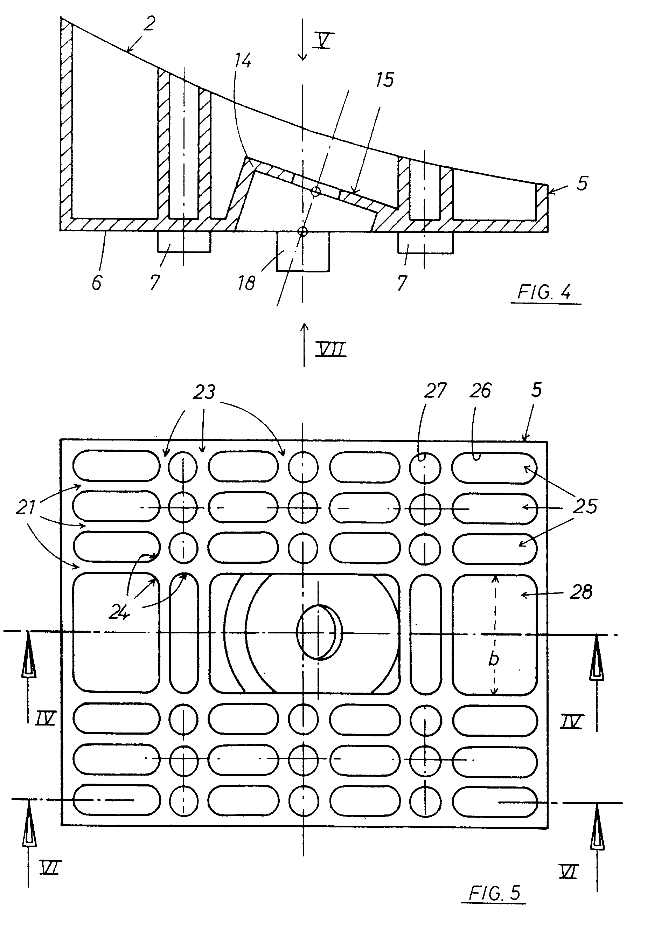

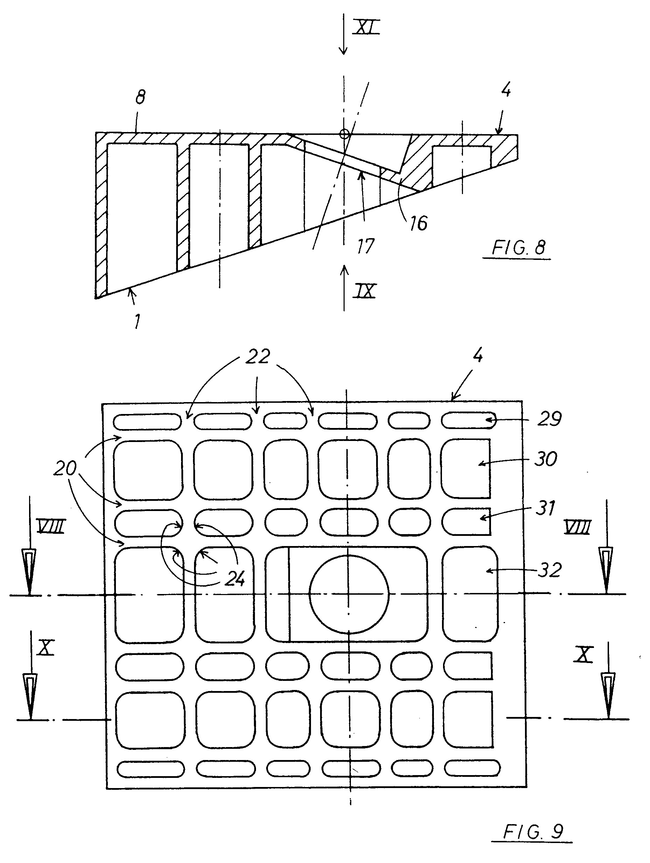

Der Unterkeil 4 ist in seinem Inneren ebenfalls mit einem Stützbock 16 versehen, dessen Oberseite 17 in der Gebrauchsstellung nach Fig. 1 parallel zur Oberseite 15 des Stützbockes 14 liegt, so daß die beiden Keile 4, 5 auch in der Gebrauchsstellung nach Fig. 1 gewünschtenfalls mittels einer Kopfschraube und einer Mutter zusammengespannt werden können, vgl. auch die Fig. 4 und 8.

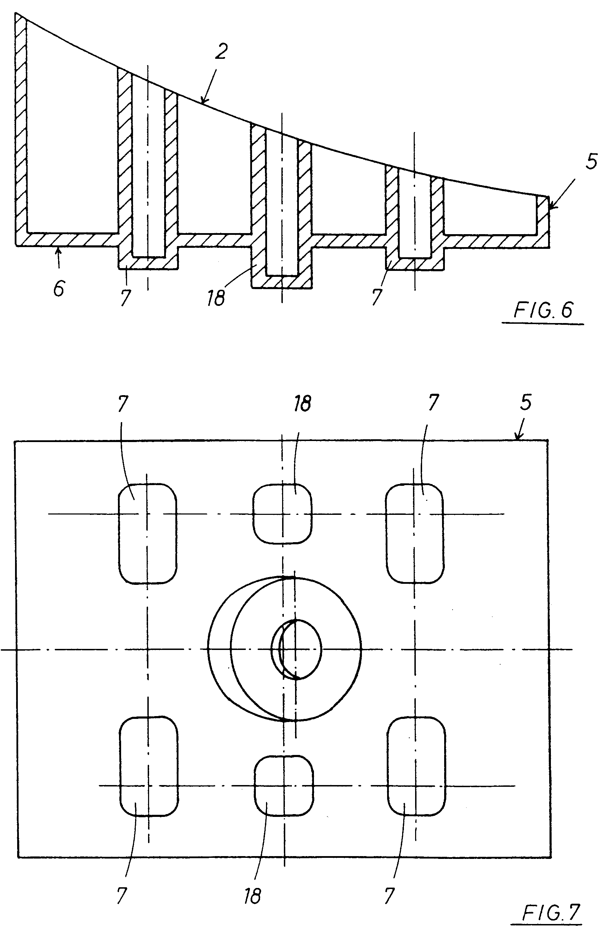

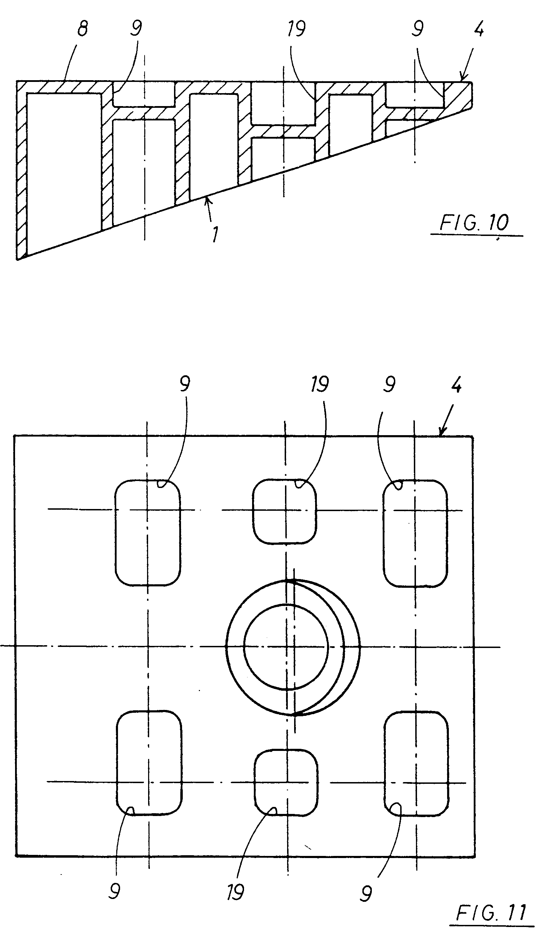

Wie insbesondere aus den Fig. 6 und 7 ersichtlich ist, ist der Oberkeil 5 an seiner Anlageseite 6 mit vier im Querschnitt länglichen Steckvorsprüngen 7 versehen, die mit ihrer Querschnitts-Längserstreckung parallel zueinander gerichtet sind und die an den Ecken eines Rechteckes angeordnet sind. Entsprechend sind die korrespondierenden Steckaufnahmen 9 ausgebildet und angeordnet, vgl. Fig. 10 und 11. Die beiden Keile 4, 5 können somit nur entweder in Gebrauchsstellung oder in Verwahrstellung zusammengesteckt werden. Zwischen den länglichen Steckvorsprüngen 7 sind mittig noch weitere, etwa quadratische Steckvorsprünge 18 vorgesehen, denen entsprechende Steckaufnahmen 19 am Unterkeil 4 zugeordnet sind.

Der Unterkeil 4 und der Oberkeil 5 bestehen aus Kunststoff, z. B. Polypropylen, und sind als Kästen ausgebildet, die jeweils durch eine Mehrzahl von sich kreuzenden Längswänden 20, 21 und Querwänden 22, 23 ausgesteift sind (vgl. Fig. 5 und 9), wobei die Kreuzungspunkte von Längs- und Querwänden durch abgerundete Eckverstrebungen 24 verstärkt sind. Die Längs- und Querwände 20, 22 bilden beim Unterkeil 4 an der Bodenfläche 1 ein Lochgitter. In gleicher Weise bilden die Längs- und Querwände 21, 23 des Oberkeiles 5 an der Reifen-Auflauffläche 2 ein Lochgitter (vgl. Fig. 3 und 5). Bei beiden Keilen ist der mittlere Längsbereich der Kästen frei von Längswänden, so daß die Gitterlöcher in diesem mittleren Längsbereich wesentlich größer als die Gitterlöcher in den äußeren Bereichen sind.

Das Lochgitter der Auflauffläche 2 des Oberkeiles 5 weist in den beiden äußeren Längsbereichen jeweils mehrere Längslochreihen 25 auf, in denen Langlöcher 26 und Kreislöcher 27 einander abwechseln. Die Löcher der mittleren Längslochreihe 28 weisen je eine Breite b etwa gleich einem Drittel der Gesamtbreite B des Auflaufkeiles auf, wobei aber die Abmessungen der Löcher dieser Lochreihe 28 in Längsrichtung des Auflaufkeiles ebenfalls stark unterschiedlich bemessen sind. Das in Fig. 5 gezeigte Lochgitter hat sich wegen des großen Reibschlusses als sehr vorteilhaft bei der Ausbildung der Reifen-Auflauffläche 2 erwiesen.

Bei dem für die Bodenfläche 1 des Unterkeiles 4 vorgesehenen Lochgitter sind wiederum mehrere parallele Lochreihen 29, 30, 31, 32 vorgesehen, wobei die Breite der Löcher innerhalb jeder Lochreihe, z. B. 30, jeweils gleich ist und die Löcher benachbarter Lochreihen, z. B. 30 und 31, eine stark unterschiedliche Lochbreite aufweisen. Die Lochreihen 29 mit den schmalsten Lochbreiten liegen außen.

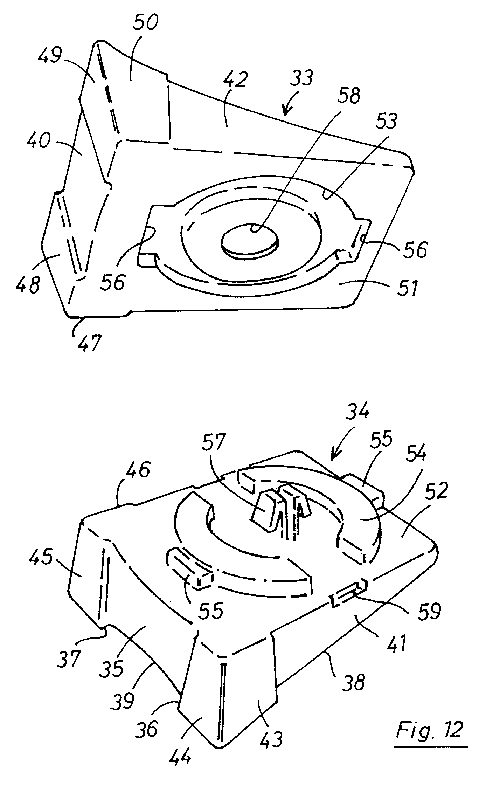

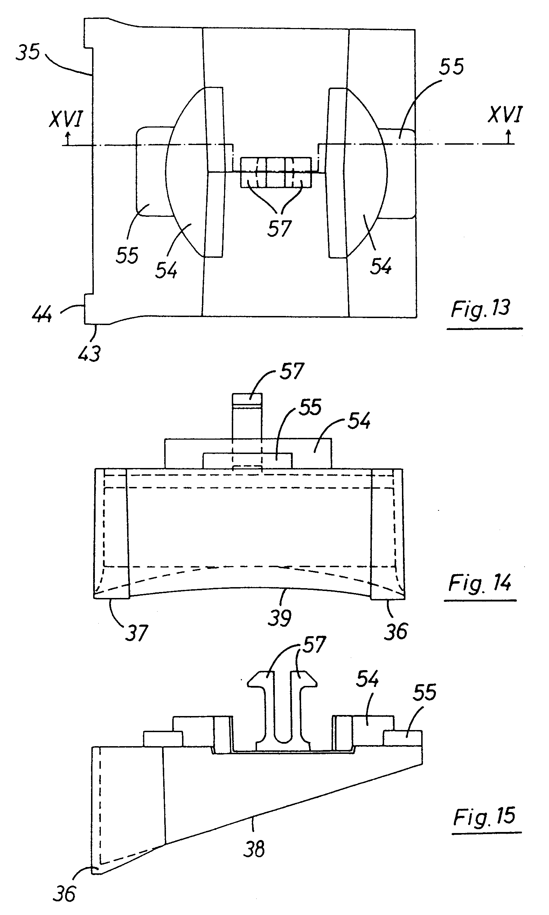

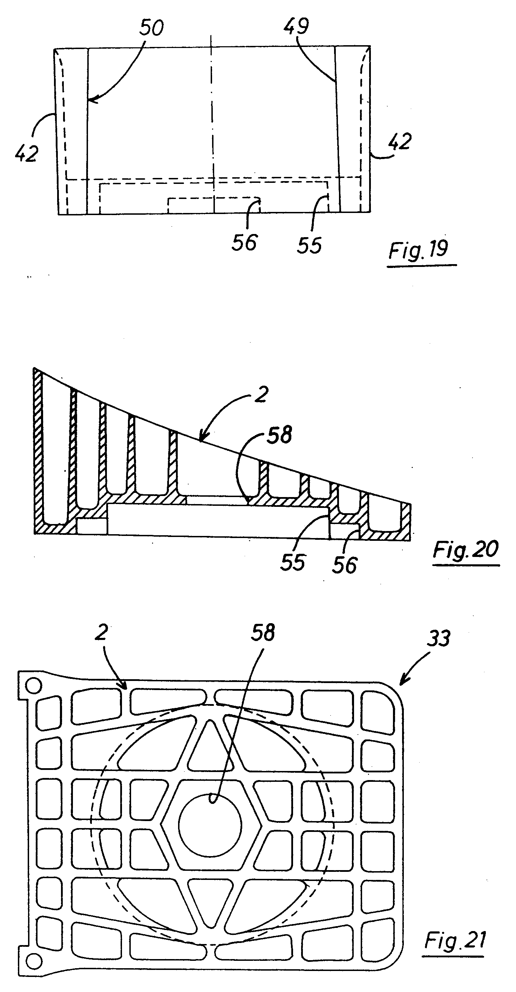

Die Fig. 12 bis 21 veranschaulichen eine zweite, bevorzugte Ausführungsform eines aus Oberkeil 33 und Unterkeil 34 bestehenden Auflaufkeiles aus Kunststoff. Der Unterkeil 34 weist an seiner hohen Keilseite 35 zwei Eckfüße 36, 37 auf, die über seine im wesentlichen ebene Bodenfläche 38 etwas vorstehen und sich im Untergrund festkrallen können. Der Unterkeil 34 ist bodenseitig zwischen seinen Eckfüßen 36, 37 mit einer flachen bogenförmigen Ausnehmung 39 von einigen Millimetern Tiefe versehen, die den Eckfüßen ausreichend Raum zum Einkrallen im Untergrund gibt, aber noch eine ausreichende Stabilität des Unterkeiles 34 zum Auffangen großer Belastungen beläßt. Sowohl der Oberkeil 33 als auch der Unterkeil 34 sind im Bereich dieser Ecken mit über ihre hohen Keilseiten 35, 40 und über ihre Längsseiten 41, 42 vorstehenden Materialverstärkungen 43 bis 50 versehen.

An ihren Anlageseiten 51, 52 sind der Oberkeil 33 und der Unterkeil 34 in ihrem zentralen Bereich mit einer großflächig ineinandergreifenden Steckeinrichtung versehen, die beim Ausführungsbeispiel aus einer kreisförmigen Steckaufnahme 53 im Oberkeil 33 und aus ringförmigen, geteilten Steckzapfen 54 am Unterkeil 34 bestehen. Der ringförmige Steckzapfen 54 ist mit zwei sich diametral gegenüberliegenden Verdrehungsschutzansätzen 55 versehen, denen im Oberkeil 33 korrespondierende Aufnahmen 56 zugeordnet sind. Die Quer- bzw. Diametralabmessung der Steckaufnahme 53 beträgt beim Ausführungsbeispiel mehr als 3/4 der Querabmessungen des Auflaufkeiles.

In zusammengebautem Zustand werden Oberkeil 33 und Unterkeil 34 durch eine lösbare Schnappverbindung 57 zusammengehalten, welche aus zwei am Unterkeil 34, und zwar in dessen Zentrum, angeformten Rastzungen besteht, die durch ein zentrales Aufnahmeloch 58 des Oberkeiles 33 hindurchgesteckt werden und mit ihren Rastzungen den Rand des Loches 58 hintergreifen.

Für einen Wechsel zwischen Gebrauchsstellung und Verwahrstellung des Auflaufkeiles müssen Oberkeil 33 und Unterkeil 34 entrastet werden. Um die Handhabung hierbei zu erleichtern, ist zwischen Oberkeil und Unterkeil eine nach außen hin offene Flachausnehmung 59 am Unterkeil 34 vorgesehen, in die ein Abhebelungswerkzeug, z.B. auch eine Münze, eingesetzt werden kann.

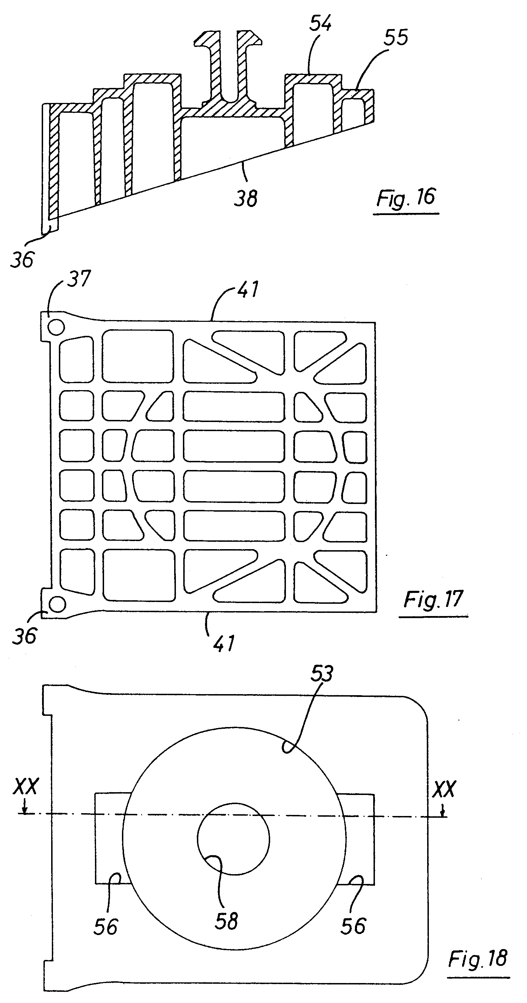

Wie die Fig. 16, 17 und 20, 21 zeigen sind auch hier Oberkeil 33 und Unterkeil 34 als Lochgitter oder Lochschiene ausgebildet, deren Löcher im Bereich der Anlageseiten 51, 52 jeweils durch Querwände an einem Ende geschlossen sind. Das Gittermuster kann in vielfältigen Abwandlungen realisiert werden, z. B. auch als exaktes Wabenmuster ausgebildet sein.

### Bezugszeichenliste

- 1: Bodenfläche
- 2: Auflauffläche
- 3: Reifen
- 4: Unterkeil
- 5: Oberkeil
- 6: Anlageseite von 5
- 7: Steckvorsprünge
- 8: Anlageseite von 4
- 9: Steckaufnahmen von 4
- 10: Schraube
- 11: Halterung
- 12: Kopf von 10
- 13: Ausnehmung
- 14: Stützbock von 5
- 15: Oberseite von 14
- 16: Stützbock von 4
- 17: Oberseite von 16
- 18: Steckvorsprünge von 5
- 19: Steckaufnahmen von 4
- 20: Längswände von 4
- 21: Längswände von 5
- 22: Querwände von 4
- 23: Querwände von 5
- 24: Eckverstrebungen
- 25: Längslochreihen von 5.
- 26: Langlöcher von 5
- 27: Kreislöcher von 5
- 28: mittlere Längslochreihe von 5
- 29: Lochreihe von 4
- 30: Lochreihe von 4
- 31: Lochreihe von 4
- 32: Lochreihe von 4
- 33: Oberkeil
- 34: Unterkeil
- 35: hohe Keilseite
- 36: Eckfüße
- 37: Eckfüße
- 38: Bodenfläche
- 39: Ausnehmung
- 40: hohe Keilseite
- 41: Längsseite
- 42: Längsseite
- 43: Materialverstärkung
- 44: Materialverstärkung
- 45: Materialverstärkung
- 46: Materialverstärkung
- 47: Materialverstärkung
- 48: Materialverstärkung
- 49: Materialverstärkung
- 50: Materialverstärkung
- 51: Anlageseite
- 52: Anlageseite
- 53: Steckaufnahme
- 54: Steckzapfen
- 55: Ansätze
- 56: Steckaufnahmen
- 57: Schnappverbindung
- 58: Loch
- 59: Flachausnehmung
- b: Breite
- B: Gesamtbreite

## Patentansprüche

1. Auflaufkeil für Personenkraftwagen oder dgl., der eine, z.B. ebene, Bodenfläche und eine gekrümmte Reifen-Auflauffläche besitzt, dadurch gekennzeichnet,
daß der Auflaufkeil in einen die Bodenfläche (1) aufweisenden Unterkeil (4, 34) und einen die Auflauffläche (2) aufweisenden Oberkeil (5, 33) unterteilt ist,
daß der Unter- und Oberkeil (4, 34; 5, 33) etwa gleiche Größe aufweisen und an ihren Anlageseiten (6, 51; 8, 52) mit korrespondierenden Steckvorsprüngen (7, 54) und Steckaufnahmen (9, 53) ineinander greifen und
daß der Unterkeil (4, 34) und der Oberkeil (5, 33) in einer um 180° gegenüber der Gebrauchsstellung gewendeten Verwahrstellung zu einem flachen, etwa trapezförmigen Gebilde zusammensteckbar sind.

2. Auflaufkeil nach Anspruch 1, dadurch gekennzeichnet, daß der Unterkeil (4) und der Oberkeil (5) aus Kunststoff bestehen und daß die Bodenfläche (1) und die Auflauffläche (2) als Lochgitter ausgebildet sind.

3. Auflaufkeil nach den Ansprüchen 1 und 2, dadurch gekennzeichnet, daß der Unter- und Oberkeil (4, 5) in der Verwahrstellung von einer Schraube (10) durchsetzt sind, zur Schraubverbindung mit einer Halterung (11).

4. Auflaufkeil nach Anspruch 3, dadurch gekennzeichnet, daß der Kopf (12) der Schraube (10) in einer Ausnehmung (13) des Oberkeiles (5, 33) versenkt aufgenommen ist.

5. Auflaufkeil nach den Ansprüchen 3 oder 4, dadurch gekennzeichnet, daß im Inneren des Oberkeiles (5) ein Stützbock (14) für den Kopf (12) der Schraube (10) angeordnet ist, dessen Oberseite (15) in der Verwahrstellung parallel zur Bodenfläche (1) des Unterkeiles (4) liegt.

6. Auflaufkeil nach den Ansprüchen 1 bis 5, dadurch gekennzeichnet, daß der Oberkeil (5) an seiner Anlageseite (6) vier an den Ecken eines Rechteckes angeordnete, im Querschnitt längliche Steckvorsprünge (7) aufweist, die mit ihrer Querschnitts-Längserstreckung parallel zueinander gerichtet sind und denen korrespondierende Aufnahmen (9) in der Anlageseite (8) des Unterkeiles (4) zugeordnet sind.

7. Auflaufkeil nach einem oder mehreren der Ansprüche 1 bis 6, dadurch gekennzeichnet, daß der Unter- und Oberkeil (4, 34; 5, 33) als Kästen ausgebildet sind, die jeweils durch eine Mehrzahl von sich kreuzenden, die Lochgitter an der Boden- und Auflauffläche (1, 2) bildenden Längs- und Querwänden (20, 21; 22, 23) ausgesteift sind, wobei die Kreuzungspunkte von Längs- und Querwänden durch abgerundete Eckverstrebungen (24) verstärkt sind.

8. Auflaufkeil nach Anspruch 7, dadurch gekennzeichnet, daß der mittlere Längsbereich der Kästen frei von Längswänden (20, 21) ist und daß die Gitterlöcher der Lochreihen (28, 32) in diesem mittleren Längsbereich wesentlich größer als die Gitterlöcher der Lochreihen (25, 29, 30, 31) in den äußeren Bereichen sind.

9. Auflaufkeil nach Anspruch 8, dadurch gekennzeichnet, daß das Lochgitter der Auflauffläche (2) in den äußeren Längsbereichen mehrere Längs-Lochreihen (25) aufweist, in denen Langlöcher (26) und Kreislöcher (27) jeweils gleicher Breite aneinander abwechseln.

10. Auflaufkeil nach Anspruch 8, dadurch gekennzeichnet, daß das Lochgitter der Bodenfläche (1) mehrere Längs-Lochreihen aufweist, wobei die Breite der Löcher innerhalb einer Lochreihe (29, 30, 31, 32) jeweils gleich ist und die Löcher jeweils benachbarter Lochreihen (29/30; 30/31; 31/32) eine stark unterschiedliche Lochbreite besitzen.

11. Auflaufkeil nach Anspruch 10, dadurch gekennzeichnet, daß die Lochreihen (29) mit den schmalsten Lochbreiten außen liegen.

12. Auflaufkeil nach einem oder mehreren der Ansprüche 1 bis 11, dadurch gekennzeichnet, daß der Unterkeil (34) an seiner hohen Keilseite (35) zwei Eckfüße (36, 37) aufweist, die über seine Bodenfläche (38) vorstehen.

13. Auflaufkeil nach Anspruch 12, dadurch gekennzeichnet, daß der Unterkeil (34) bodenseitig zwischen seinen Eckfüßen (36, 37) mit einer flachen bogenförmigen Ausnehmung (39) von einigen Millimetern Tiefe versehen ist.

14. Auflaufkeil nach den Ansprüchen 12 und 13, dadurch gekennzeichnet, daß der Auflaufkeil (33, 34) im Bereich seiner Eckfüße mit über seine hohe Keilseiten (40, 35) und/oder seine Längsseiten (41, 42) vorstehenden Materialverstärkungen (43 bis 50) versehen ist.

15. Auflaufkeil nach einem oder mehreren der Ansprüche 1 bis 14, dadurch gekennzeichnet, daß der Oberkeil (33) und der Unterkeil (34) an ihren Anlageseiten (51, 52) in ihrem mittleren Bereich mit einer großflächig ineinandergreifenden Steckeinrichtung versehen sind, deren Querabmessung größer als die Hälfte der Querabmessungen des Auflaufkeiles sind.

16. Auflaufkeil nach Anspruch 15, dadurch gekennzeichnet, daß im Oberkeil (33) eine kreisförmige Steckaufnahme (53) für eine oder mehrere am Unterkeil (34) angeformte abgerundete Steckzapfen (54) vorgesehen ist, welche mit radialen Verdrehungsschutz-Ansätzen (55) versehen sind, denen im Oberkeil (33) korrespondierende Steckaufnahmen (56) zugeordnet sind.

17. Auflaufkeil nach einem oder mehreren der Ansprüche 1 bis 16, dadurch gekennzeichnet, daß der Oberkeil (33) und der Unterkeil (34) durch eine lösbare Schnappverbindung (57) in der Gebrauchsstellung und in der Verwahrstellung zusammengehalten sind.

18. Auflaufkeil nach Anspruch 17, dadurch gekennzeichnet, daß zwischen Oberkeil (33) und Unterkeil (34) eine nach außen hin offene Flachausnehmung (59) am Unterkeil (34) zum Ansetzen eines Abhebelungswerkzeuges, z. B. auch einer Münze, angeordnet ist.

19. Auflaufkeil nach einem oder mehreren der Ansprüche 1 bis 18, dadurch gekennzeichnet, daß der Oberkeil (5, 33) und der Unterkeil (4, 34) als Lochsteine ausgebildet sind, deren Löcher an den Anlageseiten (6, 8, 51, 52) geschlossen sind.

## Claims

1. Ramp block for passenger cars or the like, which has an e.g. plane bottom surface and a curved tyre ramp surface, characterised in that the ramp block is divided into a lower block (4, 34) comprising the bottom surface (1) and an upper block (5, 33) comprising the ramp surface (2), in that the lower and upper blocks (4, 34; 5, 33) are of approximately equal size and on their contact sides (6, 51; 8, 52) interlock with corresponding projections (7, 54) and receptacles (9, 53), and in that the lower block (4, 34) and the upper block (5, 33) in a secure position turned through 180° relative to the working position can be fitted together into a flat, more or less trapezoidal structure.

2. Ramp block according to claim 1, characterised in that the lower block (4) and the upper block (5) are made of plastic and in that the bottom surface (1) and the ramp surface (2) are designed as apertured grids.

3. Ramp block according to claims 1 and 2, characterised in that the lower and upper blocks (4, 5) in the secure position are traversed by a bolt (10), for screw connection to a support (11).

4. Ramp block according to claim 3, characterised in that the head (12) of the bolt (10) is held in countersunk fashion in a recess (13) of the upper block (5, 33).

5. Ramp block according to claim 3 or 4, characterised in that inside the upper block (5) is arranged a supporting block (14) for the head (12) of the bolt (10), of which the upper side (15) in the secure position lies parallel to the bottom surface (1) of the lower block (4).

6. Ramp block according to claims 1 to 5, characterised in that the upper block (5) on its contact side (6) comprises four projections (7) of elongate cross-section which are arranged at the corners of a rectangle and which are oriented with their cross-sectional longitudinal extent parallel to each other and with which are associated corresponding receptacles (9) on the contact side (8) of the lower block (4).

7. Ramp block according to one or more of claims 1 to 6, characterised in that the lower and upper blocks (4, 34; 5, 33) are constructed as boxes which are in each case stiffened by a plurality of intersecting longitudinal and transverse walls (20, 21; 22, 23) which form the apertured grids on the bottom and ramp surfaces (1, 2), wherein the points of intersection of longitudinal and transverse walls are reinforced by rounded corner struts (24).

8. Ramp block according to claim 7, characterised in that the central longitudinal region of the boxes is free from longitudinal walls (20, 21) and in that the grid apertures of the rows of apertures (28, 32) in this central longitudinal region are substantially larger than the grid apertures of the rows of apertures (25, 29, 30, 31) in the outer regions.

9. Ramp block according to claim 8, characterised in that the apertured grid of the ramp surface (2) in the outer longitudinal regions comprises several longitudinal rows of apertures (25) in which oblong apertures (26) and round apertures (27) of in each case the same width alternate with each other.

10. Ramp block according to claim 8, characterised in that the apertured grid of the bottom surface (1) comprises several longitudinal rows of apertures, wherein the width of the apertures within a row of apertures (29, 30, 31, 32) is in each case the same and the apertures of adjacent rows of apertures (29/30; 30/31; 31/32) have a greatly different aperture width.

11. Ramp block according to claim 10, characterised in that the rows of apertures (29) with the narrowest aperture widths are located on the outside.

12. Ramp block according to one or more of claims 1 to 11, characterised in that the lower block (34) on its high wedge side (35) comprises two corner feet (36, 37) which project beyond its bottom surface (38).

13. Ramp block according to claim 12, characterised in that the lower block (34) on the bottom side between its corner feet (36, 37) is provided with a flat arcuate recess (39) with a depth of a few millimetres.

14. Ramp block according to claims 12 and 13, characterised in that the ramp block (33, 34) in the region of its corner feet is provided with material reinforcements (43 to 50) projecting beyond its high wedge sides (40, 35) and/or its longitudinal sides (41, 42).

15. Ramp block according to one or more of claims 1 to 14, characterised in that the upper block (33) and the lower block (34) on their contact sides (51, 52) in their central region are provided with a coupling system which interlocks over a large area and of which the transverse dimensions are larger than half the transverse dimensions of the ramp block.

16. Ramp block according to claim 15, characterised in that in the upper block (33) is provided a circular receptacle (53) for one or more rounded pins (54) which are formed integrally on the lower block (34) and which are provided with radial anti-twist attachments (55) with which are associated corresponding receptacles (56) in the upper block (33).

17. Ramp block according to one or more of claims 1 to 16, characterised in that the upper block (33) and the lower block (34) are held together by a releasable snap-fit connection (57) in the working position and in the secure position.

18. Ramp block according to claim 17, characterised in that between upper block (33) and lower block (34) is arranged an outwardly opening flat recess (59) on the lower block (34) for applying a lever-off tool, e.g. even a coin.

19. Ramp block according to one or more of claims 1 to 18, characterised in that the upper block (5, 33) and the lower block (4, 34) are designed as apertured bricks of which the apertures are closed on the contact sides (6, 8, 51, 52).

## Revendications

1. Cale d'accostage pour voiture particulière ou similaire, qui présente une surface au sol, par exemple plane, et une surface incurvée d'accostage de pneumatique, caractérisée en ce que la cale d'accostage est subdivisée en une cale inférieure (4, 34) présentant la surface au sol (1) et en une cale supérieure (5, 33) présentant la surface d'accostage (2), en ce que la cale inférieure et la cale supérieure (4, 34; 5, 33) sont à peu près de même taille et s'emboîtent l'une dans l'autre sur leurs faces d'appui (6, 51; 8, 52) avec des parties en saillie enfichables (7, 54) et des logements emboîtables (9, 53) qui se correspondent et en ce que la cale inférieure (4, 34) et la cale supérieure (5, 33) peuvent être emboîtées ensemble en position de rangement tournée de 180° par rapport à la position d'utilisation pour former une structure de forme aplatie et à près trapézoïdale.

2. Cale d'accostage selon la revendication 1, caractérisée en ce que la cale inférieure (4) et la cale supérieure (5) sont en plastique et en ce que la surface au sol (1) et la surface d'accostage (2) se présentent sous la forme de grilles perforées.

3. Cale d'accostage selon les revendications 1 et 2, caractérisée en ce que la cale inférieure et la cale supérieure (4, 5) sont traversées, en position de rangement, par une vis (10) pour la fixation vissée à un support (11).

4. Cale d'accostage selon la revendication 3, caractérisée en ce que la tête (12) de la vis (10) est logée et noyée dans une cavité (13) de la cale supérieure (5, 33).

5. Cale d'accostage selon les revendications 3 ou 4, caractérisée en ce qu'à l'intérieur de la cale supérieure (5) est disposé un bloc d'appui (14) pour la tête (12) de la vis (10), dont la face supérieure (15), en position de rangement, est parallèle à la surface au sol (1) de la cale inférieure (4).

6. Cale d'accostage selon les revendications 1 à 5, caractérisée en ce que la cale supérieure (5) présente sur sa face d'appui (6) quatre parties en saillie enfichables (7) de section transversale allongée, qui sont disposées aux coins d'un rectangle, qui par l'extension longitudinale de leur section transversale, sont parallèles entre elles et auxquelles sont attribués des logements (9) correspondants sur la face d'appui (8) de la cale (4) inférieure.

7. Cale d'accostage selon l'une quelconque ou plusieurs des revendications 1 à 6, caractérisée en ce que la cale inférieure et la cale supérieure (4, 34; 5, 33) sont réalisées sous la forme de caissons qui sont chacun raidis par une pluralité de cloisons longitudinales et transversales (20, 21; 22, 23) qui se croisent et forment les grilles perforées sur la surface au sol et la surface d'accostage (1, 2), les points de croisement des cloisons longitudinales et des cloisons transversales étant renforcés par des entretoises d'angle (24) arrondies.

8. Cale d'accostage selon la revendication 7, caractérisée en ce que la zone longitudinale médiane des caissons est exempte de cloisons longitudinales (20, 21) et en ce que les trous de grille des rangées de trous (28, 32) dans cette zone longitudinale médiane sont sensiblement plus grands que les trous de grille des rangées de trous (25, 29, 30, 31) situées dans les zones extérieures.

9. Cale d'accostage selon la revendication 8, caractérisée en ce que le trou de grille de la surface d'accostage (2) présente dans les zones longitudinales extérieures plusieurs rangées de trous en long (25), dans lesquelles alternent respectivement des trous oblongs (26) et des trous circulaires (27) de même largeur les uns à côté des autres.

10. Cale d'accostage selon la revendication 8, caractérisée en ce que la grille perforée de la surface au sol (1) présente plusieurs rangées de trous en long, la largeur des trous à l'intérieur d'une rangée de trous (29, 30, 31, 32) étant respectivement identique et les trous de rangées de trous respectives voisines (29/30; 30/31; 31/32) ayant une largeur de trou très différente.

11. Cale d'accostage selon la revendication 10, caractérisée en ce que les rangées de trous (29) présentant les largeurs de trou les plus étroites se situent à l'extérieur.

12. Cale d'accostage selon l'une ou plusieurs des revendications 1 à 11, caractérisée en ce que la cale inférieure (34) présente sur sa face élevée (35) deux pieds d'angle (36, 37) qui dépassent de sa surface au sol (38).

13. Cale d'accostage selon la revendication 12, caractérisée en ce que la cale inférieure (34) est pourvue, côté sol et entre ses pieds d'angle (36, 37), d'une cavité (39) plate et arquée de quelques millimètres de profondeur.

14. Cale d'accostage selon les revendications 12 et 13, caractérisée en ce que la cale (33, 34) est pourvue dans la zone de ses pieds d'angle de renforts de matériau (43 à 50) dépassant sur ses côtés (40, 35) élevés et/ou ses côtés longitudinaux (41, 42).

15. Cale d'accostage selon l'une quelconque ou plusieurs des revendications 1 à 14, caractérisée en ce que la cale supérieure (33) et la cale inférieure (34) sont pourvues, sur leurs faces d'appui (51, 52) dans leur zone médiane d'un système d'emboîtement en prise sur une grande surface, dont la dimension transversale est supérieure à la moitié des dimensions transversales de la cale d'accostage.

16. Cale d'accostage selon la revendication 15, caractérisée en ce que dans la cale supérieure (33) est prévu un logement d'emboîtement (53) circulaire pour un ou plusieurs tenons d'emboîtement ou d'enfichage (54) arrondis formés sur la cale inférieure (34) qui sont pourvus d'appendices de protection antitorsion (55) disposés radialement et auxquels sont attribués des logements d'emboîtement (56) correspondants dans la cale supérieure (33).

17. Cale d'accostage selon l'une ou plusieurs des revendications 1 à 16, caractérisée en ce que la cale supérieure (33) et la cale inférieure (34) sont maintenues ensemble par un assemblage à encliquetage amovible (57), en position d'utilisation et en position de rangement.

18. Cale d'accostage selon la revendication 17, caractérisée en ce qu'entre la cale supérieure (33) et la cale inférieure (34) est disposée une cavité plate (59) ouverte vers l'extérieur sur la cale inférieure (34) pour la mise en place d'un outil de soulèvement faisant levier, tel que par exemple une pièce de monnaie.

19. Cale d'accostage selon l'une ou plusieurs des revendications 1 à 18, caractérisée en ce que la cale supérieure (5, 33) et la cale inférieure (4, 34) sont réalisées sous la forme de briques creuses dont les trous sont fermés sur les faces d'appui (6, 8, 51, 52).
